# FASCICULE DE BREVET EUROPEEN

(11) **EP 2 567 055 B1**
(45) Date de publication et mention de la délivrance du brevet: **25.12.2013**
(21) Numéro de dépôt: 11723557.2
(22) Date de dépôt: 03.05.2011
(51) Int. Cl.: E06B 9/68, H02J 7/35

(54) **PROCÉDÉ DE CONTRÔLE DE L'ALIMENTATION EN ÉNERGIE ÉLECTRIQUE D'UNE BATTERIE D'UN DISPOSITIF D'OCCULTATION PAR UN PANNEAU PHOTOVOLTAÏQUE ET DISPOSITIF D'OCCULTATION COMPORTANT UN SYSTÈME POUR UN TEL CONTRÔLE**
VERFAHREN ZUR STEUERUNG DER VERSORGUNG VON ELEKTRISCHEM STROM VON EINER BATTERIE EINER OKKLUSIONSVORRICHTUNG DURCH EIN PHOTOVOLTAIKMODUL UND OKKLUSIONSVORRICHTUNG MIT EINEM SYSTEM FÜR SOLCH EINE STEUERUNG
METHOD OF CONTROLLING THE SUPPLY OF ELECTRICAL ENERGY OF A BATTERY OF AN OCCLUSION DEVICE BY A PHOTOVOLTAIC PANEL AND OCCLUSION DEVICE COMPRISING A SYSTEM FOR SUCH CONTROL

(30) Priorité: 06.05.2010 FR 1053521
(43) Date de publication de la demande: 13.03.2013
(73) Titulaire: BUBENDORFF, 68220 Attenschwiller (FR)
(72) Inventeur: DELPY, Vincent, F - 68510 Sierentz (FR)
(74) Mandataire: Rhein, Alain
(86) Numéro de dépôt international: PCT/FR2011/051004
(87) Numéro de publication internationale: WO 2011/138556

(56) Documents cités:
- FR-A1- 2 894 278
- FR-A1- 2 916 049

## Description

La présente invention concerne un procédé de contrôle de l'alimentation en énergie électrique d'une batterie que comporte un dispositif d'occultation motorisé par un panneau photovoltaïque équipant un tel dispositif d'occultation.

Cette invention a, encore, trait à un dispositif d'occultation motorisé conçu pour mettre en oeuvre un tel procédé.

Cette invention concerne le domaine de la fabrication des dispositifs d'occultation motorisés comportant un tablier mobile, un moteur d'entraînement de ce tablier, une batterie d'alimentation de ce moteur ainsi qu'un panneau photovoltaïque pour le chargement de cette batterie.

En particulier, on connaît des dispositifs d'occultation au moins en partie constitués par un volet roulant comportant un tablier constitué par un assemblage de lames, des coulisses latérales à l'intérieur desquelles défilent les extrémités latérales des lames du tablier, ainsi qu'un caisson surmontant les coulisses latérales. Ce volet roulant comporte, encore et incorporés au caisson, un arbre d'enroulement et de déroulement du tablier, un moteur d'entraînement de cet arbre, ainsi qu'une batterie pour l'alimentation de ce moteur en énergie électrique.

A ce propos, on observera qu'une telle batterie est chargée en usine (usuellement à 100%) de manière à conférer au volet roulant une autonomie de fonctionnement d'environ 30 jours.

Un tel dispositif d'occultation, montré par le document FR-A1-2894278, peut, encore, comporter un panneau photovoltaïque, équipant un tel volet roulant, et raccordé à la batterie pour son chargement.

A ce propos, il convient d'observer que, lors de la fabrication des différents éléments entrant dans la composition d'un tel dispositif d'occultation, un tel panneau photovoltaïque peut être fabriqué et conditionné séparément du volet roulant auquel sont intégrés le moteur ainsi que la batterie assemblée à ce moteur.

Ainsi, lors de livraison d'un tel dispositif d'occultation sur le chantier d'un bâtiment destiné à être équipé d'un tel dispositif d'occultation, ce dernier arrive sous la forme de deux colis distincts (parfois de manière décalée dans le temps) dont l'un contient le panneau photovoltaïque tandis que l'autre contient le volet roulant, notamment sous forme d'un ensemble résultant de l'assemblage d'une partie au moins des pièces de ce volet roulant et prêt à être installé dans une ouverture que comporte ce bâtiment.

Pour finaliser l'installation d'un tel dispositif d'occultation, il convient, d'une part, de fixer le panneau photovoltaïque sur le volet roulant, usuellement sur son caisson, et, d'autre part, de raccorder ce panneau photovoltaïque à la batterie, voire à une carte électronique que comporte le volet roulant et qui est raccordée à cette batterie.

Après installation d'un tel dispositif d'occultation, l'installateur procède au contrôle du bon fonctionnement de celui-ci. Etant donné que la batterie du volet roulant est chargée en usine et que le bon fonctionnement du volet roulant est contrôlé avant sa sortie d'usine, une commande de déplacement du tablier du volet roulant se traduit habituellement par un déploiement et un repliement appropriés de ce tablier.

Ce contrôle ne permet, alors, aucunement de détecter un disfonctionnement du dispositif d'occultation résultant d'un panneau photovoltaïque défectueux, d'une absence ou d'un défaut de connexion entre le panneau photovoltaïque et la batterie (ou une carte électronique), ou encore d'un défaut de chargement de la batterie par ce panneau photovoltaïque.

Un tel disfonctionnement peut, alors, uniquement être constaté lorsque la batterie est déchargée ce qui intervient plusieurs jours après l'installation du dispositif d'occultation. Ceci nécessite une nouvelle intervention de l'installateur et/ou du service après vente sans que, au cours de cette intervention, il soit d'ailleurs possible de diagnostiquer immédiatement l'origine de ce disfonctionnement.

La présente invention se veut à même de remédier aux inconvénients des dispositif d'occultation de l'état de la technique en équipant un tel dispositif d'occultation d'un système de contrôle de l'alimentation en énergie électrique de la batterie par le panneau photovoltaïque.

A cet effet, l'invention concerne un procédé de contrôle de l'alimentation en énergie électrique d'une batterie que comporte un dispositif d'occultation motorisé par un panneau photovoltaïque équipant un tel dispositif d'occultation. Ce procédé de contrôle est caractérisé par le fait que :
- on procède périodiquement à un test de l'alimentation appropriée en énergie électrique de la batterie par le panneau photovoltaïque ;
- lorsque, sur une durée déterminée, les tests d'alimentation en énergie électrique sont négatifs, on confère au dispositif d'occultation un fonctionnement distinct de son fonctionnement normal.

Cette invention concerne, également, un dispositif d'occultation motorisé comportant un tablier, un moteur pour l'entraînement en déplacement de ce tablier, une batterie pour l'alimentation en énergie électrique du moteur ainsi qu'un panneau photovoltaïque pour l'alimentation en énergie électrique de la batterie. Ce dispositif d'occultation est caractérisé par le fait qu'il comporte un système de contrôle de l'alimentation en énergie électrique de la batterie par le panneau photovoltaïque et que ce système de contrôle comporte :
- des moyens pour procéder, de manière périodique, à un test de l'alimentation appropriée en énergie électrique de la batterie par le panneau photovoltaïque ;
- des moyens pour conférer au dispositif d'occultation un fonctionnement distinct de son fonctionnement normal, ceci lorsque, sur une durée déterminée, les tests d'alimentation en énergie électrique sont négatifs.

Les avantages de la présente invention consistent en ce qu'il est possible de détecter et de diagnostiquer, de manière immédiate, un disfonctionnement du dispositif d'occultation résultant d'un panneau photovoltaïque défectueux ou absent, d'une absence ou d'un défaut de connexion entre le panneau photovoltaïque et la batterie (ou une carte électronique), ou encore d'un défaut de chargement de la batterie par ce panneau photovoltaïque.

Ainsi, lors de l'installation du dispositif d'occultation, l'installateur, en mettant en oeuvre le procédé de l'invention, peut immédiatement détecter un tel disfonctionnement et y remédier.

Un tel disfonctionnement peut, également et immédiatement, être détecté par l'occupant du bâtiment et diagnostiqué par le service après vente, ceci tout au long de la durée de vie du dispositif d'occultation.

Un autre avantage consiste en ce que le procédé de contrôle consiste, en cas de disfonctionnement de ce type, à conférer au dispositif d'occultation un fonctionnement distinct de son fonctionnement normal. Aussi, en conférant à ce dispositif d'occultation un fonctionnement reconnaissable et caractéristique d'un tel disfonctionnement (déplacement du tablier avec un mouvement saccadé), il est possible de diagnostiquer immédiatement l'origine du disfonctionnement et d'y remédier rapidement.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :
- la figure 1 est une vue schématisée et en coupe partielle d'un dispositif d'occultation, conforme à la présente invention, et comportant un volet roulant équipé d'un panneau photovoltaïque ;
- la figure 2 est une vue schématisée correspondant à un détail du dispositif d'occultation illustré figure 1 ;
- la figure 3 est un diagramme représentant les différentes étapes du procédé conforme à la présente invention, ceci selon un premier mode de réalisation ;
- la figure 4 est un diagramme représentant les différentes étapes du procédé conforme à la présente invention, ceci selon un deuxième mode de réalisation.

La présente invention concerne le domaine de la fabrication des dispositifs d'occultation motorisés.

Un tel dispositif d'occultation 1 comporte, d'une part, un système d'occultation 2 constitué par un store, une jalousie, une moustiquaire, un volet roulant ou autre.

Un tel système d'occultation 2 comporte, alors, au moins un tablier mobile 3, un moteur 4 pour l'entraînement en déplacement de ce tablier mobile 3, une batterie 5 pour l'alimentation en énergie électrique de ce moteur 4, ainsi qu'un moyen 6 pour la gestion du fonctionnement de ce système d'occultation 2.

Dans la suite de la description, il est, plus particulièrement, fait référence à un système d'occultation 2 constitué par un volet roulant 2 sachant que la présente invention n'y est cependant aucunement limitée.

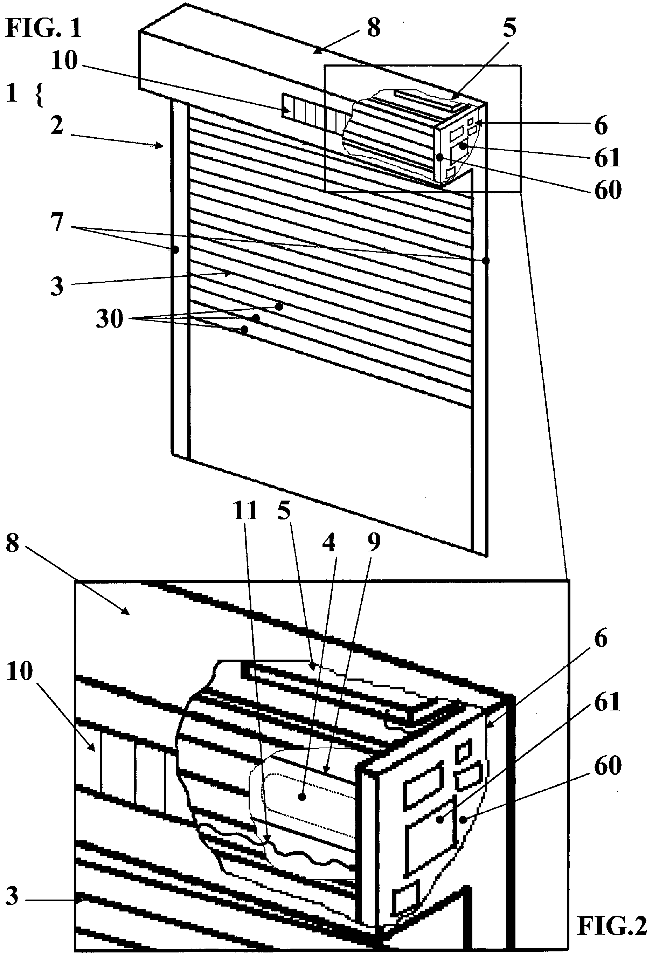

Tel que visible figures 1 et 2, un tel volet roulant 2 comporte, alors, un tablier mobile 3 constitué par une juxtaposition d'une pluralité de lames 30 assemblées entre elles, notamment par accrochage.

Ce volet roulant 2 comporte, également, des coulisses latérales 7 à l'intérieur desquelles défilent les extrémités latérales des lames 30 du tablier mobile 3 lors de son déplacement.

Un tel volet roulant 2 comporte, encore, un caisson 8, surmontant les coulisses latérales 7, et à l'intérieur duquel se replie et à partir duquel se déploie le tablier mobile 3.

Ce volet roulant 2 comporte, également et intérieurement à ce caisson 8, d'une part, un arbre 9 sur lequel s'enroule et à partir duquel se déroule ledit tablier 3 et, d'autre part, un moteur 4 pour l'entraînement de cet arbre 9 (plus particulièrement à l'intérieur duquel est engagé au moins une partie dudit moteur 4).

De plus, ledit volet roulant 2 comporte une batterie 5, conçue pour alimenter au moins le moteur 4 en énergie électrique, et usuellement positionnée à l'intérieur du dit caisson 8.

Finalement, ce volet roulant 2 comporte un moyen 6 pour la gestion de son fonctionnement.

Un tel moyen de gestion 6 se présente, usuellement, sous la forme d'une carte électronique 60 comportant une unité de traitement 61 au moins en partie constituée par un calculateur (incorporant au moins un logiciel pour la gestion du fonctionnement du dispositif d'occultation 1). Un tel moyen de gestion 6 est, de préférence, implanté à l'intérieur du caisson 8 du volet roulant 2 et est raccordé au moins au moteur 4 ainsi qu'à la batterie 5.

Tel que mentionné ci-dessus, le dispositif d'occultation 1 comporte, d'une part, un système d'occultation 2. Ce dispositif d'occultation 1 comporte, d'autre part, un panneau photovoltaïque 10 rendu solidaire de ce système d'occultation 2.

Dans le cas d'un dispositif d'occultation 2 comportant un système d'occultation 2 constitué par un volet roulant 2, un tel panneau photovoltaïque 10 peut être rendu solidaire de ce système d'occultation 2 en étant rapporté sur le caisson 8 du volet roulant 2, plus particulièrement en étant fixé sur une paroi de ce caisson 8.

D'autre part encore, ce dispositif d'occultation 2 comporte un moyen 11 pour le raccordement électrique de ce panneau photovoltaïque 10 à la batterie 5, ceci pour le chargement de cette dernière 5 en énergie électrique. A ce propos, on observera qu'un tel moyen raccordement 11 peut être conçu pour raccorder le panneau photovoltaïque 10 à la batterie 5, selon le cas, directement ou (et de préférence) indirectement et par l'intermédiaire du moyen de gestion 6 auquel ce panneau photovoltaïque 10 et cette batterie 5 sont alors raccordés.

Selon l'invention, le dispositif d'occultation 2 comporte, encore, un système pour le contrôle de l'alimentation en énergie électrique de la batterie 5 par le panneau photovoltaïque 10.

Ce système de contrôle comporte :
- des moyens pour procéder, de manière périodique, à un test de l'alimentation appropriée en énergie électrique de la batterie 5 par le panneau photovoltaïque 10 ;
- des moyens pour conférer au dispositif d'occultation 2 un fonctionnement distinct de son fonctionnement normal, ceci lorsque, sur une durée déterminée, les tests d'alimentation en énergie électrique sont négatifs.

En ce qui concerne les moyens pour procéder à un test d'alimentation, ceux-ci comportent :
- au moins un moyen pour le relevé d'au moins une grandeur électrique aux bornes d'un élément électrique que comporte le dispositif d'occultation 2 ;
- un moyen pour la comparaison de la grandeur électrique relevée avec une valeur de consigne ;
- un moyen pour la déduction de cette comparaison si le test est positif ou négatif.

A ce propos, on observera que la ou les grandeurs électriques relevées peuvent être constituées par une tension U et/ou par une intensité I.

L'élément électrique, aux bornes duquel on relève une telle grandeur électrique, peut être constitué, selon le cas, par le panneau photovoltaïque 10, par la batterie 5 ou encore par le moyen de gestion 6 (plus particulièrement par la carte électronique que comporte ce moyen de gestion 6).

De plus et selon une autre caractéristique, c'est, plus particulièrement, le moyen de gestion 6 (en particulier l'unité de traitement 61 que comporte ce moyen de gestion 6) qui comporte le moyen de relevé, le moyen de comparaison et/ou le moyen de déduction.

Tel que mentionné ci-dessus, les moyens pour procéder à un test de l'alimentation sont conçus pour procéder à un tel test de manière périodique.

Pour ce faire, ces moyens de test comportent une horloge permettant de déclencher, de manière périodique, un tel test.

C'est, plus particulièrement, le moyen de gestion 6 (en particulier l'unité de traitement 61 que comporte ce moyen de gestion 6) qui comporte, en fait, une telle horloge.

Une caractéristique additionnelle consiste en ce que ces moyens pour procéder à un tel test comportent :
- un compteur et une mémoire intégrant une valeur initiale ainsi qu'une valeur limite de ce compteur ;
- un moyen pour incrémenter ou décrémenter le compteur, ceci en cas de test d'alimentation négatif et à partir de la valeur initiale jusqu'à la valeur limite.

Là encore, c'est, plus particulièrement, le moyen de gestion 6 (en particulier l'unité de traitement 61 que comporte ce moyen de gestion 6) qui comporte, en fait, ce compteur, cette mémoire et ce moyen pour incrémenter/décrémenter ce compteur.

Tel que mentionné ci-dessus, le système de contrôle (que comporte le dispositif d'occultation 2 de l'invention) comporte, également des moyens pour conférer à ce dispositif d'occultation 2 un fonctionnement distinct de son fonctionnement normal, ceci lorsque, sur une durée déterminée, les tests d'alimentation en énergie électrique sont négatifs.

Aussi et selon une caractéristique additionnelle de l'invention, ce système de contrôle comporte encore des moyens pour la définition d'une telle durée déterminée. Là encore, le moyen de gestion 6 peut comporter de tels moyens de définition.

A ce propos, on observera que cette durée déterminée est, en fait, définie, d'une part, par la périodicité des tests et, d'autre part, par la valeur initiale et la valeur limite associées au compteur.

Selon un mode de réalisation particulier de l'invention, cette durée déterminée peut être établie à 24 heures et être alors définie, d'une part, par une périodicité des tests fixée à une minute.

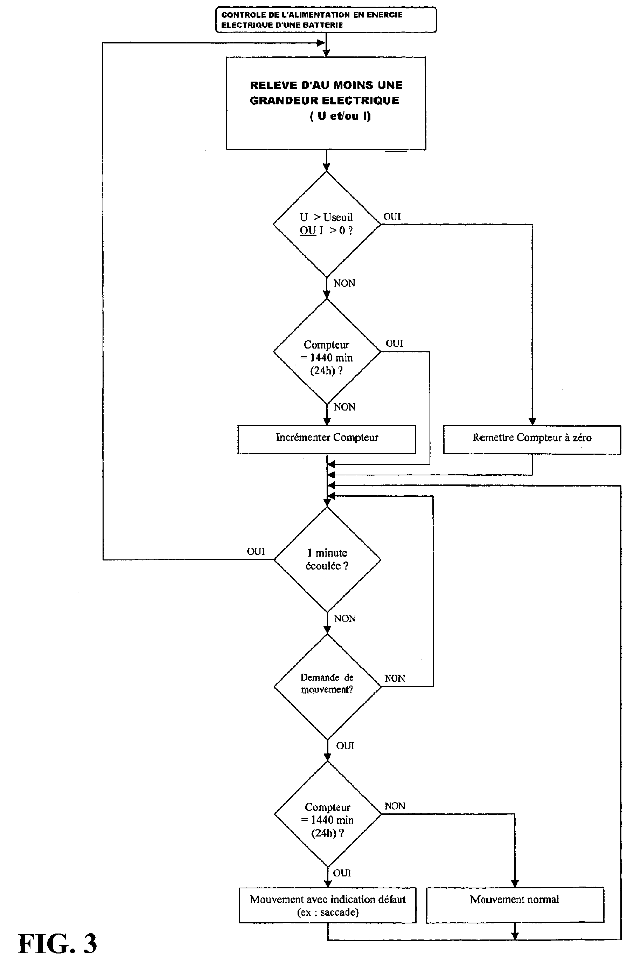

Dans un pareil cas et selon un premier mode de réalisation, cette durée déterminée est définie, d'autre part, par une valeur initiale fixée à 0 et par une valeur limite fixée à 1440, ceci pour un compteur qu'il convient d'incrémenter à chaque test négatif (figure 3).

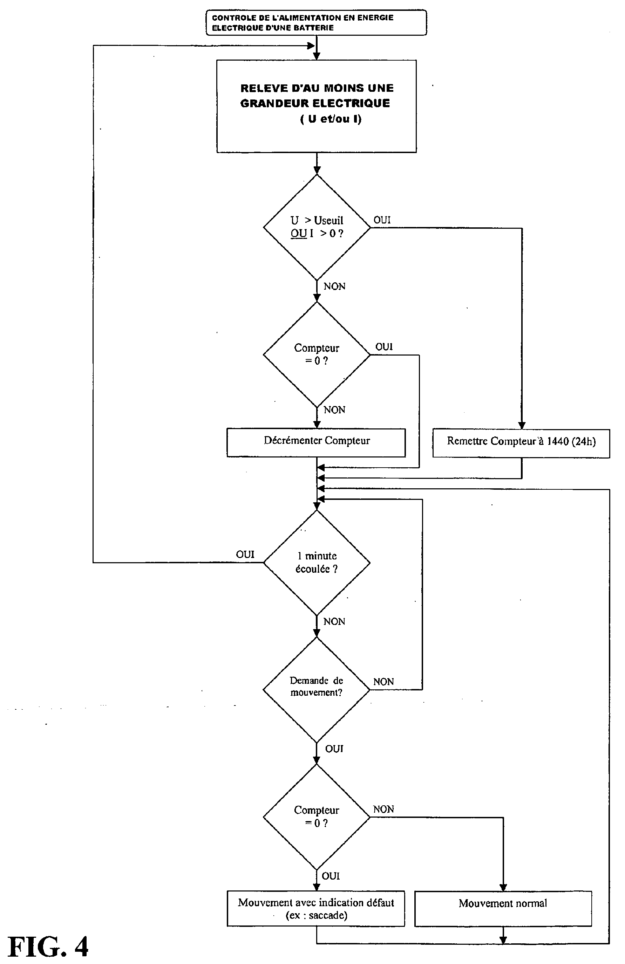

Cependant et selon un deuxième mode de réalisation, cette durée déterminée est définie, d'autre part, par une valeur initiale fixée à 1440 et par une valeur limite fixée à 0, ceci pour un compteur qu'il convient de décrémenter à chaque test négatif (figure 4).

En ce qui concerne, plus particulièrement, les moyens pour conférer au dispositif d'occultation 2 un fonctionnement distinct de son fonctionnement normal, ceux-ci comportent :
- un moyen pour la détection d'une commande (manuelle ou automatique, notamment programmée) de mouvement du tablier 3 que comporte le dispositif d'occultation 2;
- un moyen pour l'interrogation du compteur et de la mémoire (plus particulièrement de la valeur limite) ;
- un moyen pour conférer au tablier 3 du dispositif d'occultation 2 un déplacement distinct de son déplacement normal, ceci lorsque le compteur a atteint la valeur limite.

Un tel déplacement distinct peut être constitué par un déplacement de manière saccadée du tablier 3.

Là encore, c'est, plus particulièrement, le moyen de gestion 6 (en particulier l'unité de traitement 61 que comporte ce moyen de gestion 6) qui comporte un tel moyen de détection, un tel moyen d'interrogation et/ou un tel moyen pour conférer un déplacement distinct au tablier 3.

La présente invention concerne, également, un procédé de contrôle de l'alimentation en énergie électrique d'une batterie 5 que comporte un dispositif d'occultation 2 motorisé par un panneau photovoltaïque 10 équipant un tel dispositif d'occultation 1.

Un tel procédé est susceptible d'être mise en oeuvre par le dispositif d'occultation 2, présentant les caractéristiques décrites ci-dessus et/ou pouvant être spécifiquement conçu pour mettre en oeuvre ce procédé.

Un tel procédé de contrôle consiste en ce que :
- on procède périodiquement (et par le biais des moyens de test décrits ci-dessus) à un test de l'alimentation appropriée en énergie électrique de la batterie 5 par le panneau photovoltaïque 10;
- lorsque, sur une durée déterminée, les tests d'alimentation en énergie électrique sont négatifs, on confère (par les moyens décrits ci-dessus) au dispositif d'occultation 2 un fonctionnement distinct de son fonctionnement normal.

Plus précisément, lorsqu'on procède à un test de l'alimentation appropriée en énergie électrique de la batterie 5 :
- on relève (par le biais des moyens de relevé décrits ci-dessus), aux bornes d'un élément électrique (constitué par la batterie 5, le panneau photovoltaïque 10 ou le moyen de gestion 6 comme décrit ci-dessus), au moins une grandeur électrique (constituée par une tension et/ou une intensité comme décrit ci-dessus) ;
- on compare (par le biais des moyens de comparaison décrits ci-dessus) une telle grandeur électrique relevée à une valeur de consigne ;
- et on déduit (par le biais de moyen de déduction décrits ci-dessus) de cette comparaison si le test est positif ou négatif.

Selon une autre caractéristique de ce procédé :
- on définit, pour un compteur, une valeur initiale ainsi qu'une valeur limite (correspondant, en fait, à la durée limite susmentionnée);
- on procède périodiquement à un test d'alimentation appropriée en énergie électrique de la batterie 5 par le panneau photovoltaïque 10;
- pour chaque test d'alimentation négatif, on incrémente ou (et selon le mode de réalisation) on décrémente le compteur ;
- lorsque, après incrémentations ou (et selon le mode de réalisation) après décrémentations, le compteur atteint la valeur limite (correspondant à la durée limite), on confère au dispositif d'occultation 2 un fonctionnement distinct du fonctionnement normal.

Une caractéristique additionnelle consiste, alors également, en ce que l'on remet le compteur à sa valeur initiale pour chaque test positif. Dès lors, après réinitialisation de ce compteur et en cas de détection d'un test négatif, on incrémente ou (et selon le mode de réalisation) on décrémente ce compteur à partir de cette valeur initiale.

Selon une autre caractéristique du procédé de l'invention, on établit la durée déterminée, sur laquelle les tests d'alimentation en énergie électrique sont négatifs, et à l'issue de laquelle on confère au dispositif d'occultation 2 un fonctionnement distinct de son fonctionnement normal.

Selon une caractéristique additionnelle de l'invention, on établit la durée déterminée, sur laquelle les tests d'alimentation en énergie électrique sont négatifs, en sorte de correspondre à au moins 24 heures. Une telle caractéristique permet, avantageusement, de procéder à des tests sur une durée déterminée comportant au moins une période diurne et, ainsi, d'éviter de procéder à des tests uniquement la nuit.

Encore une autre caractéristique consiste en ce que, après avoir établi la durée déterminée, on définit (notamment de manière automatique et par l'intermédiaire du moyen de gestion 6) cette durée déterminée par la périodicité des tests d'alimentation ainsi que par les valeurs initiale et limite associées au compteur.

Ainsi et selon un mode préféré de réalisation de l'invention, on établit la durée déterminée à 24 heures.

On définit, ensuite, cette durée déterminée, d'une part, par une périodicité correspondant à 1 minute.

De manière additionnelle et selon un premier mode de réalisation (illustré figure 1), on définit, encore et d'autre part, cette durée déterminée par une valeur initiale égale à 0 et par une valeur limite égale à 1440.

Cependant et selon un deuxième mode de réalisation (illustré figure 2), on définit, de manière additionnelle et d'autre part, cette durée déterminée par une valeur initiale égale à 1440 et par une valeur limite égale à 0.

Le procédé de contrôle selon l'invention est conçu en sorte de pouvoir contrôler l'alimentation, de manière appropriée, en énergie électrique d'une batterie 5 par un panneau photovoltaïque 10, ceci aussi bien lors de l'installation du dispositif d'occultation 1 que durant la vie de ce dispositif d'occultation 1.

Pour ce faire, ce procédé consiste en ce qu'on sélectionne la durée déterminée, sur laquelle les tests d'alimentation en énergie électrique sont négatifs, pour procéder à un contrôle de l'alimentation en énergie électrique, selon le cas, lors de l'installation du dispositif d'occultation 1 et/ou tout au long de la durée de vie du dispositif d'occultation 1.

Ainsi, en sélectionnant cette durée déterminée pour procéder à un contrôle lors de l'installation du dispositif d'occultation 1, il est avantageusement possible pour un installateur de vérifier l'absence de disfonctionnement du dispositif d'occultation 1 résultant d'un panneau photovoltaïque défectueux, d'une absence ou d'un défaut de connexion entre le panneau photovoltaïque et la batterie (ou une carte électronique), ou encore d'un défaut de chargement de la batterie par ce panneau photovoltaïque. Une telle vérification peut être assurée à la lumière du jour et/ou à celle d'un dispositif d'éclairage (par exemple une lampe de poche) manipulé par l'installateur.

En sélectionnant cette durée déterminée pour procéder à un contrôle tout au long de la durée de vie du dispositif d'occultation 1, il est avantageusement possible pour un occupant du bâtiment de détecter un disfonctionnement du dispositif d'occultation 1 et pour un opérateur du service après vente de diagnostiquer un tel disfonctionnement.

Au cours de la vie d'un tel dispositif d'occultation 1, un tel disfonctionnement peut, alors, résulter d'un panneau photovoltaïque défectueux (car dégradé, abîmé ou vétuste) ou absent (notamment après avoir été volé), d'une absence de connexion (déconnexion, dégradation d'un câble de connexion ou d'une piste de la carte électronique) ou d'un défaut de connexion (oxydation) entre le panneau photovoltaïque et la batterie (ou une carte électronique), ou encore d'un défaut de chargement de la batterie 5 par ce panneau photovoltaïque 10.

Tel que mentionné ci-dessus, le procédé consiste à conférer au dispositif d'occultation 1 un fonctionnement distinct de son fonctionnement normal, ceci lorsque, sur une durée déterminée, les tests d'alimentation en énergie électrique sont négatifs.

A ce propos, on observera qu'on confère au dispositif d'occultation 1 un tel fonctionnement distinct, ceci en cas de commande du fonctionnement de ce dispositif d'occultation 1, plus particulièrement en cas de commande du fonctionnement du tablier 3 que comporte ce dispositif d'occultation 1.

Selon une autre caractéristique, on confère à ce dispositif d'occultation 1 un fonctionnement distinct, ceci en conférant un déplacement particulier (plus particulièrement un déplacement de manière saccadé) au tablier 3 que comporte ce dispositif d'occultation 1.

Un tel déplacement particulier est aisément reconnaissable et peut être caractéristique du type de disfonctionnement (défaut d'alimentation en énergie électrique de la batterie 5 par le panneau photovoltaïque 10 tel que décrit ci-dessus).

Tel que mentionné ci-dessus, le procédé conforme à l'invention permet de procéder à un contrôle de l'alimentation en énergie électrique de la batterie 5 par un panneau photovoltaïque 10, ceci tout au long de la durée de vie du dispositif d'occultation 1.

A ce propos, il convient d'observer que ce procédé peut, alors, être mis en oeuvre de manière manuelle (par un installateur, par un opérateur du service après vente et/ou par l'occupant du bâtiment) ou (et de préférence) de manière automatique, ceci par le biais du moyen 6 pour la gestion du fonctionnement du dispositif d'occultation 1.

Ce moyen de gestion 6 peut, alors, adopter le fonctionnement d'un automate et/ou être conçu pour dérouler, en boucle, les différentes étapes du procédé de l'invention, plus particulièrement de manière conforme aux diagrammes des figures 3 et 4, ceci continuellement et/ou tout au long de la durée de vie du dispositif d'occultation 1.

## Revendications

1. Procédé de contrôle de l'alimentation en énergie électrique d'une batterie (5) que comporte un dispositif d'occultation motorisé (1) par un panneau photovoltaïque (10) équipant un tel dispositif d'occultation (1), **caractérisé par le fait que** :
- on procède périodiquement à un test de l'alimentation appropriée en énergie électrique de la batterie (5) par le panneau photovoltaïque (10);
- lorsque, sur une durée déterminée, les tests d'alimentation en énergie électrique sont négatifs, on confère au dispositif d'occultation (1) un fonctionnement distinct de son fonctionnement normal.

2. Procédé selon la revendication 1, **caractérisé par le fait que**, lorsqu'on procède à un test de l'alimentation appropriée en énergie électrique de la batterie (5), on relève, aux bornes d'un élément électrique (5, 6, 10) du dispositif d'occultation (1), au moins une grandeur électrique, on compare une telle grandeur électrique relevée à une valeur de consigne, et on déduit de cette comparaison si le test est positif ou négatif.

3. Procédé selon l'une quelconque des revendications précédentes, **caractérisé par le fait que** :
- on définit, pour un compteur, une valeur initiale ainsi qu'une valeur limite ;
- on procède périodiquement à un test d'alimentation appropriée en énergie électrique de la batterie (5) par le panneau photovoltaïque (1);
- pour chaque test d'alimentation négatif, on incrémente ou on décrémente le compteur ;
- lorsque, après incrémentations ou après décrémentations, le compteur atteint la valeur limite, on confère au dispositif d'occultation (1) un fonctionnement distinct du fonctionnement normal.

4. Procédé selon la revendication 3, **caractérisé par le fait qu'**on remet le compteur à sa valeur initiale pour chaque test positif.

5. Procédé selon l'une quelconque des revendications 3 ou 4, **caractérisé par le fait qu'**on établit la durée déterminée sur laquelle les tests d'alimentation en énergie électrique sont négatifs et on définit cette durée déterminée par la périodicité des tests d'alimentation ainsi que par les valeurs initiale et limite.

6. Procédé selon l'une quelconque des revendications précédentes, **caractérisé par le fait qu'**on établit la durée déterminée, sur laquelle les tests d'alimentation en énergie électrique sont négatifs, en sorte de correspondre à au moins 24 heures.

7. Procédé selon l'une quelconque des revendications précédentes, **caractérisé par le fait qu'**on sélectionne la durée déterminée, sur laquelle les tests d'alimentation en énergie électrique sont négatifs, pour procéder à un contrôle de l'alimentation en énergie électrique, selon le cas, lors de l'installation du dispositif d'occultation (1) et/ou tout au long de la durée de vie du dispositif d'occultation (1).

8. Procédé selon l'une quelconque des revendications précédentes, **caractérisé par le fait qu'**on confère au dispositif d'occultation (1) un fonctionnement distinct de son fonctionnement normal, ceci en cas de commande du fonctionnement de ce dispositif d'occultation (1) et/ou en conférant un déplacement particulier au tablier (3) que comporte ce dispositif d'occultation (1).

9. Dispositif d'occultation motorisé (1) comportant un tablier (3), un moteur (4) pour l'entraînement en déplacement de ce tablier (3), une batterie (5) pour l'alimentation en énergie électrique du moteur (4) ainsi qu'un panneau photovoltaïque (10) pour l'alimentation en énergie électrique de la batterie (5), **caractérisé par le fait qu'**il comporte un système de contrôle de l'alimentation en énergie électrique de la batterie (5) par le panneau photovoltaïque (10) et que ce système de contrôle comporte :
- des moyens pour procéder, de manière périodique, à un test de l'alimentation appropriée en énergie électrique de la batterie (5) par le panneau photovoltaïque (10);
- des moyens pour conférer au dispositif d'occultation (1) un fonctionnement distinct de son fonctionnement normal, ceci lorsque, sur une durée déterminée, les tests d'alimentation en énergie électrique sont négatifs.

10. Dispositif (1) selon la revendication 9, **caractérisé par le fait que** les moyens pour procéder à un test comportent :
- au moins un moyen pour le relevé d'au moins une grandeur électrique aux bornes d'un élément électrique (5, 6, 10) que comporte le dispositif d'occultation (1);
- un moyen pour la comparaison de la grandeur électrique relevée avec une valeur de consigne ;
- un moyen pour la déduction de cette comparaison si le test est positif ou négatif.

11. Dispositif (1) selon l'une quelconque des revendications 9 ou 10, **caractérisé par le fait que** les moyens pour procéder à un test comportent une horloge pour déclencher, de manière périodique, un tel test.

12. Dispositif (1) selon l'une quelconque des revendications 9 à 11, **caractérisé par le fait que** les moyens pour procéder à un test comportent :
- un compteur et une mémoire intégrant une valeur initiale ainsi qu'une valeur limite associées à ce compteur ;
- un moyen pour incrémenter ou décrémenter le compteur, ceci en cas de test d'alimentation négatif et à partir de la valeur initiale jusqu'à la valeur limite.

13. Dispositif (1) selon la revendication 12, **caractérisé par le fait que** les moyens pour conférer au dispositif d'occultation (1) un fonctionnement distinct comportent :
- un moyen pour la détection d'une commande de mouvement du tablier (3) du dispositif d'occultation (1);
- un moyen pour l'interrogation du compteur et de la mémoire ;
- un moyen pour conférer au tablier (3) du dispositif d'occultation (1) un déplacement distinct de son déplacement normal, ceci lorsque le compteur a atteint la valeur limite.

14. Dispositif (1) selon l'une quelconque des revendications 9 à 13, **caractérisé par le fait qu'**il comporte une unité de traitement (61) incorporant une partie au moins des moyens pour procéder à un test et/ou une partie au moins des moyens pour conférer au dispositif d'occultation (1) un fonctionnement distinct de son fonctionnement normal.

## Patentansprüche

1. Verfahren zur Steuerung der Versorgung von elektrischem Strom von einer Batterie (5), die eine motorgetriebene Okklusionsvorrichtung (1) umfasst, durch ein Photovoltaikmodul (10), mit welchem eine solche Okklusionsvorrichtung (1) ausgestattet ist, **dadurch gekennzeichnet, dass**:
- periodisch ein Test der angemessenen Versorgung von elektrischem Strom der Batterie (5) durch das Photovoltaikmodul (10) durchgeführt wird;
- wenn innerhalb eines bestimmten Zeitraums die Tests der Versorgung von elektrischem Strom negativ sind, der Okklusionsvorrichtung (1) ein sich von ihrem Normalbetrieb unterscheidendes Funktionieren ermöglicht wird.

2. Verfahren nach Anspruch 1, **dadurch gekennzeichnet, dass**, wenn ein Test der angemessenen Versorgung von elektrischem Strom der Batterie (5) durchgeführt wird, an den Klemmen eines elektrischen Elements (5, 6, 10) der Okklusionsvorrichtung (1) zumindest eine elektrische Größe erfasst wird, wobei eine solche erfasste elektrische Größe mit einem Einstellwert verglichen und aus diesem Vergleich abgeleitet wird, ob der Test positiv oder negativ ist.

3. Verfahren nach irgendeinem der vorgehenden Ansprüche, **dadurch gekennzeichnet, dass**:
- für einen Zähler ein Anfangswert sowie ein Grenzwert definiert wird;
- periodisch ein Test der angemessenen Versorgung von elektrischem Strom der Batterie (5) durch das Photovoltaikmodul (1) durchgeführt wird;
- für jeden negativen Versorgungstest der Zähler inkrementiert oder dekrementiert wird;
- wenn nach dem Inkrementieren oder nach den Dekrementieren der Zähler den Grenzwert erreicht, der Okklusionsvorrichtung (1) ein sich von dem Normalbetrieb unterscheidendes Funktionieren ermöglicht wird.

4. Verfahren nach Anspruch 3, **dadurch gekennzeichnet, dass** für jeden positiven Test der Zähler auf seinen Anfangswert gestellt wird.

5. Verfahren nach irgendeinem der Ansprüche 3 oder 4, **dadurch gekennzeichnet, dass** der bestimmte Zeitraum, innerhalb welches die Tests der Versorgung von elektrischem Strom negativ sind, eingestellt wird und dieser bestimmte Zeitraum durch die Periodizität der Versorgungstests sowie durch die Anfangs- und Grenzwerte definiert wird.

6. Verfahren nach irgendeinem der vorgehenden Ansprüche, **dadurch gekennzeichnet, dass** der bestimmte Zeitraum, innerhalb welches die Tests der Versorgung von elektrischem Strom negativ sind, derart eingestellt wird, um zumindest 24 Stunden zu entsprechen.

7. Verfahren nach irgendeinem der vorgehenden Ansprüche, **dadurch gekennzeichnet, dass** der bestimmte Zeitraum, innerhalb welches die Tests der Versorgung von elektrischem Strom negativ sind, ausgewählt wird, um eine Steuerung der Versorgung von elektrischem Strom je nach Fall bei der Anbringung der Okklusionsvorrichtung (1) und/oder während der Lebensdauer der Okklusionsvorrichtung (1) durchzuführen.

8. Verfahren nach irgendeinem der vorgehenden Ansprüche, **dadurch gekennzeichnet, dass** der Okklusionsvorrichtung (1) ein sich von ihrem Normalbetrieb unterscheidendes Funktionieren, und zwar im Falle der Steuerung des Funktionierens dieser Okklusionsvorrichtung (1), ermöglicht wird, und/oder indem der Decke (3), die diese Okklusionsvorrichtung (1) umfasst, eine besondere Verlagerung ermöglicht wird.

9. Motorgetriebene Okklusionsvorrichtung (1), umfassend eine Decke (3), einen Motor (4) für den Antrieb in Bewegung dieser Decke (3), eine Batterie (5) für die Versorgung von elektrischem Strom des Motors (4) sowie ein Photovoltaikmodul (10) für die Versorgung von elektrischem Strom der Batterie (5), **dadurch gekennzeichnet, dass** sie ein System für die Steuerung der Versorgung von elektrischem Strom der Batterie (5) durch das Photovoltaikmodul (10) umfasst, und dass dieses Steuerungssystem Folgendes umfasst:
- Mittel, um periodisch einen Test der angemessenen Versorgung von elektrischem Strom der Batterie (5) durch das Photovoltaikmodul (10) durchzuführen;
- Mittel, um der Okklusionsvorrichtung (1) ein sich von ihrem Normalbetrieb unterscheidendes Funktionieren zu ermöglichen, und zwar wenn innerhalb eines bestimmten Zeitraums die Tests der Versorgung von elektrischem Strom negativ sind.

10. Vorrichtung (1) nach Anspruch 9, **dadurch gekennzeichnet, dass** die Mittel, um einen Test durchzuführen, Folgendes umfassen:
- zumindest ein Mittel zum Erfassen von zumindest einer elektrischen Größe an den Klemmen eines elektrischen Elements (5, 6,10), welches die Okklusionsvorrichtung (1) umfasst;
- ein Mittel zum Vergleich der erfassten elektrischen Größe mit einem Einstellwert ;
- ein Mittel für die Schlussfolgerung aus diesem Vergleich, ob der Test positiv oder negativ ist.

11. Vorrichtung (1) nach irgendeinem der Ansprüche 9 oder 10, **dadurch gekennzeichnet, dass** die Mittel, um einen Test durchzuführen, einen Zeitgeber umfassen, um einen solchen Test periodisch auszulösen.

12. Vorrichtung (1) nach irgendeinem der Ansprüche 9 bis 11, **dadurch gekennzeichnet, dass** die Mittel, um einen Test durchzuführen, Folgendes umfassen:
- einen Zähler und einen Speicher, der einen Anfangswert sowie einen Grenzwert, die diesem Zähler zugeordnet sind, integriert;
- ein Mittel, um den Zähler, und zwar bei negativem Versorgungstest und ab dem Anfangswert bis zum Grenzwert hin, zu inkrementieren oder zu dekrementieren.

13. Vorrichtung (1) nach Anspruch 12, **dadurch gekennzeichnet, dass** die Mittel, um der Okklusionsvorrichtung (1) ein unterschiedliches Funktionieren zu ermöglichen, Folgendes umfassen:
- ein Mittel zur Erfassung einer Steuerung der Bewegung der Decke (3) der Okklusionsvorrichtung (1);
- ein Mittel für die Abfrage des Zählers und des Speichers;
- ein Mittel, um der Decke (3) der Okklusionsvorrichtung (1) eine sich von seiner normalen Bewegung unterscheidende Verlagerung zu ermöglichen, und zwar, wenn der Zähler den Grenzwert erreicht hat.

14. Vorrichtung (1) nach irgendeinem der Ansprüche 9 bis 13, **dadurch gekennzeichnet, dass** sie eine Verarbeitungseinheit (61) einschließt, die zumindest einen Teil von den Mitteln, um einen Test durchzuführen, und/oder zumindest einen Teil von den Mitteln, um der Okklusionsvorrichtung (1) ein sich von ihrem Normalbetrieb unterscheidendes Funktionieren zu ermöglichen, umfasst.

## Claims

1. Method for controlling the electric power supply to a battery (5) a motorized shading device (1) includes, from a photovoltaic panel (10) such a shading device (1) is provided with, wherein :
- a test of the proper electric power supply from the photovoltaic panel (10) to the battery (5) is periodically proceeded to ;
- when the tests of the electric power supply are negative over a determined period of time, the shading device (1) is provided with an operation different from its normal operation.

2. Method according to claim 1, wherein, when a test of the proper electric power supply to the battery (5) is proceeded to, at least one electrical value is read at the terminals of an electric element (5, 6, 10) of the shading device (1), such an electrical value being read is compared with a set value and from this comparison is derived whether the test is positive or negative.

3. Method according to any of the preceding claims, wherein :
- an initial value as well as a limit value are defined for a counter ;
- a test of the proper electric power supply from the photovoltaic panel (1) to the battery (5) is periodically proceeded to ;
- for each negative supply test, the counter is incremented or decremented ;
- when, after the incrementing or after the decrementing, the counter reaches the limit value, the shading device (1) is provided with an operation different from its normal operation.

4. Method according to claim 3, wherein the counter is reset to its initial value for each positive test.

5. Method according to any of claims 3 or 4, wherein the determined period of time, during which the tests of the electric power supply are negative, is set and this determined period of time is defined by the periodicity of the supply tests as well as by the initial and limit values.

6. Method according to any of the preceding claims, wherein the determined period of time, during which the tests of the electric power supply are negative, is set so as to correspond to at least 24 hours.

7. Method according to any of the preceding claims, wherein the determined period of time, during which the tests of the electric power supply are negative, is chosen so as to proceed to a control of the electric power supply, as the case may be, when installing the shading device (1) and/or during the lifetime of the shading device (1).

8. Method according to any of the preceding claims, wherein the shading device (1) is provided with an operation different from its normal operation, this in case of controlling the operation of this shading device (1), and/or by providing the apron (3) this shading device (1) includes with a particular displacement.

9. Motorized shading device (1), including an apron (3), a motor (4) for driving this apron (3) in displacement, a battery (5) for supplying the motor (4) with electric power, as well as a photovoltaic panel (10) for supplying the battery (5) with electric power, wherein it includes a system for controlling the electric power supply of the battery (5) by the photovoltaic panel (10) and this control system includes :
- means for proceeding periodically to a test of the proper electric power supply to the battery (5) from the photovoltaic panel (10) ;
- means for providing the shading device (1) with an operation different from its normal operation, this when the tests of the electric power supply are negative over a determined period of time.

10. Device (1) according to claim 9, wherein the means for proceeding to a test include :
- at least one means for reading an electrical value at the terminals of an electric element (5, 6,10) the shading device (1) includes ;
- means for comparing the electrical value being read with a set value ;
- means for deriving from this comparison whether the test is positive or negative.

11. Device (1) according to any of claims 9 or 10, wherein the means for proceeding to a test include a clock for periodically triggering such a test.

12. Device (1) according to any of claims 9 to 11, wherein the means for proceeding to a test include :
- a counter and a memory integrating an initial value as well as a limit value associated with this counter ;
- means for incrementing or decrementing the counter, this in case of a negative supply test and from the initial value to the limit value.

13. Device (1) according to claim 12, wherein the means for providing the shading device (1) with a different operation include :
- means for detecting a control of the displacement of the apron (3) of the shading device (1) ;
- means for interrogating the counter and the memory ;
- means for providing the apron (3) of the shading device (1) with an operation different from its normal operation, this when the counter has reached the limit value.

14. Device (1) according to any of claims 9 to 13, wherein it includes processing means (61) incorporating at least part of the means for proceeding to a test, and/or at least part of the means for providing the shading device (1) with an operation different from its normal operation.
